# EUROPÄISCHE PATENTANMELDUNG

(11) **EP 4 733 805 A1**
(43) Veröffentlichungstag der Anmeldung: **29.04.2026**
(21) Anmeldenummer: 25197890.4
(22) Anmeldetag: 25.08.2025
(51) Int. Cl.: G01S 7/483, F41H 13/00, G01S 7/497, G01S 17/95

(54) **VERFAHREN UND SYSTEM ZUR MESSUNG DES EINFLUSSES TURBULENTER STÖRUNGEN AUF EINE LASERBESTRAHLUNG EINES NICHT KOOPERATIVEN ZIELS BEIM DURCHLAUFEN EINER TURBULENTEN ATMOSPHÄRE**

(30) Priorität: 28.10.2024 DE 102024003548
(71) Anmelder: MBDA Deutschland GmbH, 86529 Schrobenhausen (DE)
(72) Erfinder: ZOZ, Jürgen, 86316 Friedberg (DE)
(74) Vertreter: Isarpatent

(57) **Zusammenfassung**

Ein Verfahren zur Messung des Einflusses turbulenter Störungen auf eine Laserbestrahlung eines Ziels beim Durchlaufen einer turbulenten Atmosphäre umfasst Fokussieren eines Messlaserstrahls auf das Ziel mit einer optischen Einrichtung; Kollimieren eines von dem Ziel aufgrund der Bestrahlung mit dem Messlaserstrahl zurückreflektierten und mit der optischen Einrichtung empfangenen reflektierten Laserstrahls in einer Sensorebene einer Sensoreinrichtung; wiederholtes Messen eines ortsabhängigen Gradientenfeldes einer Wellenfront des kollimierten reflektierten Laserstrahls in der Sensorebene in einer Anzahl von Einzelmessungen, wobei der Messlaserstrahl nach jeder Einzelmessung derart angepasst wird, dass die Einzelmessungen statistisch unabhängig voneinander sind; und Mitteln des gemessenen Gradientenfeldes über die Anzahl von Einzelmessungen zur Abschätzung einer Turbulenzstörung des Messlaserstrahls, wobei aus dem gemittelten Gradientenfeld eine zugehörige turbulenz-gestörte Wellenfront mittels digitaler Signalverarbeitung rekonstruiert wird.

## Beschreibung

Die vorliegende Erfindung betrifft ein Verfahren und ein System zur Messung des Einflusses turbulenter Störungen auf eine Laserbestrahlung eines Ziels beim Durchlaufen einer turbulenten Atmosphäre.

Die Wirkung einer Hochenergielaserwaffe (HEL-Waffe) auf ein zu bekämpfendes Ziel wird neben der Laserleistung maßgeblich durch den Spotdurchmesser und die Intensität des Laserstrahles auf dem Ziel bestimmt. Durch Luftturbulenzen kann der Spotdurchmesser des Laserstrahls auf dem Ziel deutlich vergrößert werden, was sich grundsätzlich auf die Zieleinwirkung des Laserstrahls niederschlagen kann. Beispielsweise kann es in einem derartigen Fall notwendig werden, die Bestrahlungsdauer zu erhöhen, um eine vergleichbare Wirkung wie bei vernachlässigbarer Turbulenz zu erzielen.

Die Auswirkungen von Turbulenzen auf einen Laserstrahl können prinzipiell in zwei Anteile aufgeteilt werden, den sogenannten Tip/Tilt-Anteil, der eine turbulenzerzeugte Wanderung des Laserspotschwerpunktes beschreibt, und den Anteil der sogenannten Turbulenzen höherer Ordnung (im Folgenden abgekürzt als Turbulenzen hO), die zu einer Verschmierung und/oder zu einer Verbreiterung des Laserspots führen können. Die Messung und die Kompensierung der Wanderung des Laserspotschwerpunktes sind typischerweise mit geeigneten Verfahren gut handhabbar, sodass eine Wanderung des Laserspotschwerpunkts auf dem Ziel normalerweise ausreichend unterbunden werden kann.

Um auch die Auswirkungen der Turbulenzen hO auf den Spotdurchmesser zu verkleinern, könnten in Anlehnung an die Astronomie oder die optische Telekommunikation im Prinzip sogenannte adaptive Optiken verwendet werden. Beispielsweise könnte die Turbulenz direkt oder indirekt bestimmt und der Ausgangsstrahl darauf aufbauend mit einer konjugierten (umgekehrten) Wellenfront geeignet vorverzerrt werden, um die turbulenten Störungen bei der Strahlpropagation auf das Ziel soweit wie möglich zu kompensieren.

Einerseits könnte hierzu die turbulent gestörte Wellenfront direkt gemessen werden. Wäre beispielsweise auf dem Ziel eine punktförmige Lichtquelle angebracht, so könnte diese punktförmige Lichtquelle auf einen geeigneten Wellenfrontsensor wie beispielsweise einem Hartmann-Shack-Sensor abgebildet werden. Anschließend könnte die Kompensierung mit einem mechanisch bewegten und verformbaren Spiegel umgesetzt werden.

Andererseits könnte auf eine direkte Messung verzichtet werden, indem stattdessen ein Gütemaß für den turbulenzgestörten Spot ermittelt wird, z.B. die Intensität des Spots, und die Wellenfront des fokussierten Lasers so lange nachgeregelt wird, bis ein Optimum des Gütemaßes und damit gewissermaßen indirekt auch eine kompensierende konjugierte Wellenfront gefunden ist. In diesem Fall könnte auf den technologisch aufwendigen und dynamisch ggf. eingeschränkten Spiegelansatz verzichtet werden. Für ein derartiges Verfahren wäre das Ziel jedoch beispielsweise mit einem Retroreflektor zu versehen, um ein eindeutiges Gütemaß zu erhalten.

Für die oben beschriebenen Verfahren benötigen die Ziele somit entweder eine aktiv strahlende Punktquelle und/oder ein weiteres Element zur Gütemessung, z.B. einen Retroreflektor. Da Ziele, die mit eine HEL-Waffe bekämpft werden, diese Elemente im Allgemeinen nicht besitzen, erscheint die Anwendung dieser Verfahren eher schwierig. Derartige Ziele werden deshalb im Folgenden als nicht kooperative Ziele bezeichnet.

Ein zentraler Unterschied in der Anwendung von Turbulenzkompensationsverfahren in HEL-Waffensystemen im Vergleich zu den bekannten und realisierten Anwendungen in der Astronomie und der lasergestützten Kommunikation dürfte hierbei darin liegen, dass weder ein natürliches Gütemaß für den Strahldurchmesser auf dem Ziel, noch eine ideale Punktquelle wie in der Astronomie zur Verfügung stehen. Erzeugt man mit einem Messlaser und/oder dem Hochenergielaser einen Spot auf dem Ziel, so erhält man keine Punktquelle, sondern einen durch Beugung und Turbulenzeinflüsse beeinflussten Spot mit endlicher Ausdehnung, welcher durch eine im Allgemeinen raue Oberfläche des Zieles reflektiert wird. Dadurch können bei der Rückpropagation neben den zu messenden turbulenten Wellenfrontstörungen auch sogenannte Speckleeffekte auftreten, welche zu zusätzlichen nicht turbulent verursachten Wellenfrontfehlern in einer kollimierten Empfangsebene der HEL-Waffe führen können. Die endliche Spotausdehnung und die durch die Zielrauigkeit verursachten Speckleeffekte haben somit einen Einfluss auf eine Wellenfrontmessung der Turbulenz, was klassische Messverfahren, z.B. auf Basis eines Hartmann-Shack-Sensors, ungenau macht.

Allgemein ist zu beachten, dass Leuchterscheinungen aufgrund der Wechselwirkung des Laserstrahles mit dem Material des Zieles, im Folgenden als Prozessleuchten bezeichnet, auftreten können, welche aufgrund ihrer Strahlintensität eine Messung eines Wellenfrontsensors bzw. die Bestimmung eines Gütemaßes mehr oder weniger stark beeinflussen können. Weiterhin kann die Oberfläche des Zieles durch die Einwirkung des Hochenergie-Laserstrahls verändert werden, was wiederum die Reflexionsfähigkeit für die Messung mit einem Wellenfrontsensor bzw. für die Bestimmung eines Gütemaßes beeinflussen kann. Bei einem Vergleich verschiedener Verfahren zur Wellenfrontmessung sind diese Aspekte zu berücksichtigen.

Die Druckschrift DE 10 2021 001 067 B4 beschreibt ein Verfahren, bei welchem die Turbulenzen hO und deren Amplitudenverteilung in einer Empfangsebene präzise gemessen und darauf aufbauend korrigiert werden können, obwohl Wellenfrontfehler aufgrund einer endlichen Spotausdehnung in Kombination mit einer rauen Oberfläche des Ziels vorhanden sind. Um dies zu erreichen, wird eine ortsabhängige Phase und ggf. eine ortsabhängige Amplitude eines vom Ziel reflektierten Messlaserstrahls in einer Anzahl von Einzelmessungen wiederholt gemessen, wobei der Messlaserstrahl nach jeder Einzelmessung derart angepasst wird, dass die Einzelmessungen statistisch unabhängig voneinander sind. Anschließend werden die gemessenen ortsabhängigen Phasen und ggf. ortsabhängigen Amplituden über die Anzahl von Einzelmessungen zur Abschätzung der Turbulenzstörung des Messlaserstrahls gemittelt. Die Einflüsse der rauen Zieloberfläche mitteln sich dabei heraus, denn aufgrund der Reflexion des ausgedehnten Spots an der rauen Zieloberfläche kommt es zu einer stochastischen Änderung der Wellenfront des rückreflektierten Strahls. Die derart gewonnene Schätzung der Turbulenzstörung kann anschließend für turbulenzunterdrückende Verfahren genutzt werden.

Vor diesem Hintergrund liegt der vorliegenden Erfindung die Aufgabe zugrunde, Lösungen für die präzise Turbulenzmessung und ggf. Turbulenzkorrektur von Laserwaffen zu finden, die mit möglichst einfachem Messaufbau realisierbar sind.

Erfindungsgemäß wird diese Aufgabe gelöst durch ein Verfahren mit den Merkmalen des Patentanspruchs 1 und durch ein System mit den Merkmalen des Patentanspruchs 7.

Demgemäß ist ein Verfahren zur Messung des Einflusses turbulenter Störungen auf eine Laserbestrahlung eines Ziels beim Durchlaufen einer turbulenten Atmosphäre vorgesehen. Das Verfahren umfasst Fokussieren eines Messlaserstrahls auf das Ziel mit einer optischen Einrichtung; Kollimieren eines von dem Ziel aufgrund der Bestrahlung mit dem Messlaserstrahl zurückreflektierten und mit der optischen Einrichtung empfangenen reflektierten Laserstrahls in einer Sensorebene einer Sensoreinrichtung; wiederholtes Messen eines ortsabhängigen Gradientenfeldes einer Wellenfront des kollimierten reflektierten Laserstrahls in der Sensorebene in einer Anzahl von Einzelmessungen, wobei der Messlaserstrahl nach jeder Einzelmessung derart angepasst wird, dass die Einzelmessungen statistisch unabhängig voneinander sind; und Mitteln des gemessenen Gradientenfeldes über die Anzahl von Einzelmessungen zur Abschätzung einer Turbulenzstörung des Messlaserstrahls, wobei aus dem gemittelten Gradientenfeld eine zugehörige turbulenz-gestörte Wellenfront mittels digitaler Signalverarbeitung rekonstruiert wird.

Weiterhin ist ein System zur Messung des Einflusses turbulenter Störungen auf eine Laserbestrahlung eines Ziels beim Durchlaufen einer turbulenten Atmosphäre vorgesehen. Das System umfasst eine Lasereinrichtung, welche zur Erzeugung eines Messlaserstrahls ausgebildet ist; eine optische Einrichtung, welche zur Fokussierung des Messlaserstrahls auf das Ziel, zum Empfang eines von dem Ziel aufgrund der Bestrahlung mit dem Messlaserstrahl zurückreflektierten Laserstrahls und zur Kollimierung des zurückreflektierten Laserstrahls in einer Sensorebene ausgebildet ist; eine Sensoreinrichtung, welche zum wiederholten Messen eines ortsabhängigen Gradientenfeldes einer Wellenfront des kollimierten reflektierten Laserstrahls in der Sensorebene in einer Anzahl von Einzelmessungen ausgebildet ist, wobei der Messlaserstrahl nach jeder Einzelmessung derart angepasst wird, dass die Einzelmessungen statistisch unabhängig voneinander sind; und eine Berechnungseinrichtung, welche dazu ausgebildet ist, das gemessene Gradientenfeld über die Anzahl von Einzelmessungen zu mitteln und darauf aufbauend eine Turbulenzstörung des Messlaserstrahls abzuschätzen, wobei aus dem gemittelten Gradientenfeld eine zugehörige turbulenz-gestörte Wellenfront mittels digitaler Signalverarbeitung rekonstruiert wird.

Eine der vorliegenden Erfindung zugrunde liegende Idee besteht darin, die Turbulenzen hO in der Empfangsebene trotz der durch die raue Zieloberfläche verursachten Wellenfrontfehler präzise zu messen und ggf. zu korrigieren, indem mögliche Einflüsse der Zieloberfläche durch geeignete Mittelung einer Anzahl N von Messergebnissen eliminiert werden. Mit der Erfindung wird hierbei insbesondere ein Ansatz bereitgestellt, dessen Messergebnis nicht durch die turbulenzverursachte Spotverbreiterung und die raue Zieloberfläche beeinflusst wird.

Gedanklicher Ausgangspunkt ist hierbei das Phasen- und Amplituden- bzw. Intensitätsmittelungsverfahren der DE 10 2021 001 067 B4 (im Folgenden kurz PIMV). In dem dort beschriebenen Verfahren wird in jeder von N Einzelmessungen eine Wellenfront des vom Ziel reflektierten turbulent-gestörten Strahls direkt anhand der zugehörigen ortsabhängigen Phasen und ggf. Amplituden gemessen. Im vorliegenden Verfahren wird im Unterschied dazu das Gradientenfeld der Wellenfront, d.h. die räumliche Ableitung der Wellenfronten, also die differentielle Wellenfront, N-fach gemessen und anschließend ein gemitteltes Gradientenfeld bestimmt, aus welchem mit Hilfe bekannter Verfahren der digitalen Signalverarbeitung wiederum die zugehörige Wellenfront, welche turbulenz-gestört ist, nachträglich rekonstruiert werden kann (im Folgenden wird das vorliegende Verfahren deshalb als dPIMV abgekürzt). Genau wie im Verfahren der DE 10 2021 001 067 B4 hebt sich bei der Mittelung der Einfluss der rauen Oberfläche des Ziels heraus. Die rekonstruierte Wellenfront kann als Messwert für die Turbulenz an eine Turbulenzkompensation weitergeleitet werden.

Diese geänderte Vorgehensweise bietet den erheblichen Vorteil, dass das System mit einem deutlich einfacheren Aufbau realisiert werden kann. Für eine direkte Messung der gestörten turbulenten Wellenfront für das PIMV sind heterodyne oder interferometrische Empfangssensoren notwendig. Diese erfordern einen optisch sehr komplexen Aufbau, stellen hohe Anforderungen an den Messlaser und eine Härtung für militärische Anwendungen ist technisch sehr anspruchsvoll. Im Gegensatz dazu ist der optische Aufbau für das vorliegende dPIMV deutlich einfacher zu realisieren, beispielsweise mit Hilfe eines gewöhnlichen Hartmann-Shack-Sensors als Sensoreinrichtung in Kombination mit einem schnellen Tip-Tilt-Spiegel zur Anpassung des Messlaserstrahls. Die Rekonstruktion der turbulenten Wellenfront aus dem gemittelten Gradientenfeld ist zwar aufwendig, kann dabei jedoch mit digitaler Signalverarbeitung erfolgen und ist mit bekannten Verfahren aus dem Stand der Technik ohne weiteres echtzeitfähig möglich. Beispiele für derartige Verfahren umfassen:
- C. Schulze et al., "Wavefront reconstruction by modal decomposition,"
- G. Dai, "Modal wave-front reconstruction with Zernike polynomials and Karhunen-Loève functions,"
- R. C. Cannon, "Global wave-front reconstruction using Shack-Hartmann sensors,"
- K. L. Baker, "Least-squares wave-front reconstruction of Shack-Hartmann sensors and shearing interferometers using multigrid techniques".

Weiterhin ist erwähnenswert, dass bei der Umsetzung des PIMV mit heterodynen Verfahren der Dopplereffekt mit zu berücksichtigen ist. Dieser spielt beim vorliegenden dPIMV keine Rolle. Als weitere Vorteile des dPIMV sind zu nennen, dass es zum einen einfach in nullregelnden Turbulenzunterdrückungsverfahren einsetzbar ist und zum anderen keine "Unwrapping Probleme" wie beim PIMV zu lösen sind.

Dem vorliegenden Verfahren liegt wie beim PIMV zugrunde, dass der Spot des Messlasers auf dem Ziel (ohne Turbulenzkompensation) im Allgemeinen deutlich größer im Vergleich zu einer beugungsbegrenzten Abbildung ist. Wird dieser verbreiterte Spot auf der rauen Zieloberfläche reflektiert, so kommt es zu einer stochastischen Änderung der Wellenfront des rückreflektierten Strahles. Im Empfänger wird der rückreflektierte Strahl wieder kollimiert. Mit einem geeigneten Verfahren kann das Gradientenfeld der Wellenfront, d.h. die differentielle Wellenfront, des rückreflektierten kollimierten Strahles in der Sensorebene bzw. der kollimierten Empfangsebene gemessen werden. Dieser entspricht nicht mehr der gewünschten Verteilung der Turbulenz, wie er bei einer punktförmigen Lichtquelle erzeugt würde, sondern ist mit einer durch die raue Oberfläche verursachten Störung überlagert.

Um den Verlauf der Turbulenz zu bestimmen, werden bei dem vorliegenden Ansatz N Einzelmessungen hintereinander durchgeführt. Bei jeder Einzelmessung wird die ortsabhängige räumliche Ableitung der Wellenfront des kollimierten Empfangsfeld ermittelt. Hierbei wird angenommen, dass während der Messzeit der N Teilmessungen die Turbulenz und während einer Einzelmessung die Reflexion der rauen Oberfläche des Ziels näherungsweise konstant ist. Es wird weiterhin angenommen, dass die Reflexion des Messlasers auf einer Oberfläche erfolgt, deren Rauigkeit größer als die Wellenlänge des Messlasers ist und dass die N Teilmessungen statistisch voneinander unabhängig sind. Letzteres kann beispielsweise dadurch erreicht werden, dass der Messlaserspot auf dem Ziel nach jeder Messung geeignet verändert wird, z.B. indem er innerhalb des isoplanatischen Winkels N mal so verschoben wird, dass durch die statistische Verteilung der Rauigkeit der Oberfläche statistisch unabhängige Messungen entstehen. Mittelt man die N Messungen, so konvergiert die aus dem gemittelten Gradientenfeld rekonstruierte Wellenfront gegen die gesuchte Wellenfront hO.

Unter Wellenfront wird hierbei der ortsabhängige Phasenverlauf des optischen Feldes verstanden, den ein Punktstrahler auf dem Ziel beim Durchlaufen einer turbulenten Atmosphäre in der kollimierten Empfangsebene erzeugen würde. Die Wellenfront höherer Ordnung (Wellenfront hO) beschreibt damit den Anteil der Wellenfront ohne den linearen Phasenanteil (d.h. den Tip-Tilt-Anteil). Im Weiteren wird dabei davon ausgegangen, dass der Tip-Tilt-Anteil der Turbulenz bereits anderweitig kompensiert ist, der Laserspot auf dem Ziel somit keine Schwerpunktswanderung mehr zeigt.

Für die Messung der sich zeitlich ändernden Wellenfront hO kann somit die folgende Messabfolge periodisch wiederholt werden, wobei die Periodendauer deutlich kürzer sei als die Änderungszeit der Wellenfront:
- Innerhalb einer Periode werden N Einzelmessungen durchgeführt. Die Zahl N wird hierbei derart gewählt, dass eine gewünschte Messgenauigkeit für die Wellenfront hO erreicht wird. Eine Einzelmessung kann in etwa folgenden Ablauf haben:
   ▪ Der Messlaser wird mittels eines optischen Elementes (z.B. eine Linse und/oder ein Teleskop) auf die Zieloberfläche fokussiert.
   ▪ Der von der rauen Zieloberfläche reflektierte Laserstrahl wird mit demselben optischen Element empfangen und kollimiert.
   ▪ Der rücklaufende kollimierte Empfangsstrahl wird durch ein geeignetes optisches Element (z.B. ein Strahlteiler oder ein Polarisationsstrahlteiler) von dem Sendestrahl getrennt.
   ▪ Das Gradientenfeld der Wellenfront des kollimierten Empfangsstrahls wird mit einem geeigneten Auswertesensor ermittelt, wobei das gemessene Gradientenfeld zur weiteren Verarbeitung gespeichert werden kann.
- Nach Abschluss einer Einzelmessung wird der Sendestrahls des Messlasers durch eine optische Vorrichtung derart verändert, dass eine weitere statistisch unabhängige Messung erfolgen kann. Dies kann beispielsweise durch eine Tip/Tilt-Verschiebung erfolgen, die den Laserspot des Messlasers auf dem Ziel verschiebt. Es sind aber auch andere Methoden, wie beispielsweise eine Verzerrung des Sendestrahls denkbar.
- Es werden solange neue Einzelmessungen durchgeführt, bis N Messungen erreicht sind.
- Zur Schätzung der Wellenfront hO werden nach den N Einzelmessungen die gemessen ortsabhängigen Gradientenfelder gemittelt und aus dem gemittelten Verlauf die turbulente Wellenfront mit Hilfe geeigneter digitaler Verfahren rekonstruiert. Im Ergebnis erhält man die Schätzung der Wellenfront hO.
- Die Schätzung der Wellenfront hO kann dann ggf. genutzt werden für turbulenzunterdrückende Verfahren.
- Nach Ablauf der Periodenzeit kann der Messvorgang von neuem beginnen.

Um den vorliegenden dPlMV-Ansatz in der Praxis umsetzen zu können, kann der Fachmann je nach Anwendung folgende Annahmen bzw. Voraussetzungen sicherstellen:
- Als Messlaser kommt beispielsweise ein Laser mit guter Strahlqualität in Betracht.
- Die Zeitkonstante für die Änderung der zu messenden Wellenfront hO sollte deutlich größer als die Messzeit für die N Einzelmessungen sein, d.h. die Messrate sollte deutlich größer als die Änderungsfrequenz der Turbulenz sein (Greenwoodfrequenz).
- Die Rauigkeit der Zieloberfläche sollte größer als die verwendete Wellenlänge sein.
- Während einer Einzelmessung sollten die Reflexionen auf der rauen Zieloberfläche näherungsweise konstant sein.
- Die Laufzeit des Lichtes sollte bei der Taktung des Verfahrens mitberücksichtigt werden.
- Der Abstand zwischen der beschriebenen Vorrichtung und dem Ziel sollte bekannt sein, z.B. durch separate Messung.
- Die erzeugten Messlaserspots sollten innerhalb des isoplanatischen Winkel der zu messenden Wellenfront hO bleiben.

Die Schätzung der Wellenfront hO kann insbesondere dazu genutzt werden, um turbulenzunterdrückende Verfahren für einen oder mehrere Laserstrahlen durchzuführen. Beispielsweise können die Turbulenzen auch für einen Messlaserstrahl kompensiert werden. Derart können beispielsweise Messungenauigkeiten aufgrund von Szintillationseffekten verringert werden, indem beispielsweise der Amplitudenverlauf entsprechend angepasst wird. Ebenso ist es möglich für einen Wirkstrahl, z.B. einer Laserwaffe oder einer anderen Anwendung, die Turbulenz zu kompensieren. Es ist beispielsweise denkbar, dass der beschriebene Ansatz auch in anderen technischen Bereichen Anwendung finden kann, zum Beispiel in der Augenvermessung, der optischen Telekommunikation, für bildgebende Verfahren bei starker Turbulenz etc.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der Messlaserstrahl nach jeder Einzelmessung auf dem Ziel verschoben und/oder verzerrt werden, um die Einzelmessungen statistisch unabhängig voneinander zumachen.

Beispielsweise kann eine Tip-Tilt-Vorrichtung dazu verwendet werden, den oder die Strahlen innerhalb des isoplanatischen Winkels N-mal auf der Zieloberfläche zu verschieben. Ebenso sind alternativ oder zusätzlich weitere Änderungen des Messlaserstrahls möglich, die zu statistisch unabhängigen Messungen führen. Beispielsweise kann der Messlaserstrahl durch Phasenänderungen geeignet verzerrt werden.

Gemäß einer Weiterbildung kann als Sensoreinrichtung ein Hartmann-Shack-Sensor verwendet werden.

Die Sensoreinrichtung ist somit kostengünstig mit Hilfe bekannter einfacher Standardlösungen realisierbar.

Gemäß einer Weiterbildung kann der Messlaserstrahl gepulst betrieben werden.

Speziell in dieser Weiterbildung vermeidet das vorliegende Verfahren Schwierigkeiten mit Rückstreuung und Prozessleuchten. Da sowohl für PIMV als auch für dPIMV der optische Sende- und Empfangskanal aus Realisierungs- und Genauigkeitsgründen vorzugsweise identisch sind, ergeben sie für den Messlaser kleine Rückstreuungen im optischen Aufbau, die in den Empfangskanal zurückgekoppelt werden und das Empfangssignal stören können. Durch Nutzung von gepulsten Messlasern lässt sich dies durch Gating des Empfangssensors leicht umgehen. Ein weiterer Vorteil eines gegateten Sensors, z.B. eines Hartmann-Shack-Sensors, ist die Möglichkeit, auftretendes Prozessleuchten zu unterdrücken, welches durch eine Laser-Material-Interaktion eines Hochenergielasers entstehen kann. Obwohl auch für PIMV ein gepulster Betrieb zur Unterdrückung der Rückstreuungen und des Prozessleuchtens denkbar erscheint, sind der notwendige optische Aufbau und die Anforderungen an den Messlaser deutlich höher als für das dPIMV. Im Gegensatz dazu kann für die Umsetzung des dPIMV auf etablierte Komponenten zurückgreifen werden.

Gemäß einer Weiterbildung kann zusammen mit dem Gradientenfeld eine ortsabhängige Intensität des kollimierten reflektierten Laserstrahls wiederholt gemessen und anschließend ebenfalls über die Anzahl von Einzelmessungen zur Abschätzung einer Turbulenzstörung des Messlaserstrahls gemittelt werden.

Es werden somit nicht nur die Phasenverläufe, sondern auch die Intensitätsverläufe berücksichtigt, wodurch das volle Verbesserungspotenzial des vorliegenden Ansatzes ausgeschöpft werden kann (z.B. im Falle von starken Turbulenzen). Damit ist unter anderem eine Full-Field-Kompensation möglich.

Gemäß einer Weiterbildung kann das Ziel mit einem Wirklaserstrahl einer Laserwaffe bestrahlt werden. Das Verfahren kann dann ferner Anpassen der Bestrahlung des Ziels mit dem Wirklaserstrahl in Abhängigkeit von der abgeschätzten Turbulenzstörung umfassen, um den Einfluss von Turbulenzen zu kompensieren.

In dieser Weiterbildung werden somit der oder die Laserstrahlen eines HEL-Waffensystems zur Unterdrückung von Turbulenzeffekten angepasst. Die beschriebene Messanordnung kann damit genutzt werden, um die Turbulenzen hO in einem HEL-Waffensystem zu kompensieren. Das Verfahren erlaubt dabei insbesondere eine präzise Messung der turbulenzgestörten Wellenfront bei unkooperativen Zielen (d.h. militärischen, nichtinstrumentierten Zielen), wobei die Ziele im Allgemeinen eine raue Oberfläche aufweisen. Physikalisch ist die Bandbreite des Verfahrens dabei nur durch die Laufzeit des Lichtes begrenzt und auch technisch sind keine prinzipiellen Limitationen zu erwarten. Damit eignet sich dieses Verfahren auch für die Turbulenzmessung und Unterdrückung bei sich sehr schnell bewegenden Zielen, z.B. fliegende Ziele bei Airborne-Laser-Anwendungen. Allgemein ist das Verfahren sowohl für kohärente wie konventionelle Hochenergie-Laserquellen nutzbar.

Konkrete Umsetzungen für derartige Turbulenzkorrekturen eines Laserwaffensystems basierend auf einer Abschätzung der Turbulenzstörung können dabei beispielsweise der DE 10 2021 001 067 B4 entnommen werden.

Gemäß einer Weiterbildung kann der Wirklaserstrahl als Messlaserstrahl eingesetzt werden.

Ein Vorteil dieser Variante ist es, dass neben dem Wirklaser, z.B. einem kohärent gekoppelten Hochenergielaser mit gekachelter Apertur, kein zusätzlicher Messlaser notwendig ist. Allerdings ist in diesem Fall zu beachten, dass die Strahlreflexion von dem Ziel durch die Interaktion des HELs mit dem Zielmaterial beeinflusst werden kann. Auch die Strahlteilung und die Unterdrückung von Streustrahlung insbesondere innerhalb der Optik können technologisch eine Herausforderung darstellen. Des Weiteren sollte sichergestellt werden können, dass die aufsummierte reine Messzeit kurz im Vergleich zur Strahlzeit zur Wirkung auf dem Ziel ist, weil ansonsten sich die Zeit zur Zerstörung des Zieles erhöhen und eine Turbulenzkompensation nicht mehr rechtfertigen würde.

Gemäß einer Weiterbildung kann der Wirklaserstrahl eine unterschiedliche Wellenlänge als der Messlaserstrahl aufweisen.

In diesem Fall würden Wirklaser und Messlaser somit getrennt realisierbar sein, wobei sie trotz der unterschiedlichen Wellenläge mit derselben optischen Einrichtung fokussierbar und detektierbar wären.

Gemäß einer Weiterbildung kann der Wirklaserstrahl innerhalb des isoplanatischen Winkels neben den Messlaserstrahl auf einen räumlich getrennten Bereich des Ziels fokussiert werden.

In diesem Fall wird die Turbulenzmessung nicht von der Interaktion des HELs mit dem Zielmaterial beeinflusst. Durch die Wellenlängentrennung des HELs und des Messlasers kann der dPlMV-Messkanal wesentlich besser gegen HEL-Streustrahlung geschützt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht eines Systems zur Messung des Einflusses turbulenter Störungen auf die Laserbestrahlung eines Ziels gemäß einer Ausführungsform der Erfindung; und
- Fig. 2: schematisches Ablaufdiagramm eines Verfahrens zur Messung des Einflusses turbulenter Störungen mit dem System aus Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

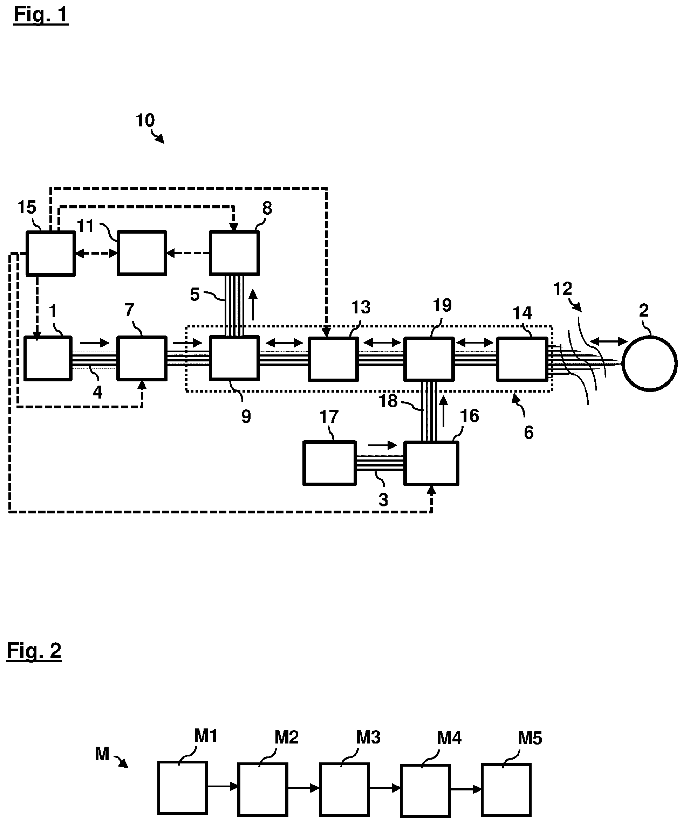

Figur 1 zeigt eine schematische Ansicht eines Systems 10 zur Messung des Einflusses turbulenter Störungen auf eine Laserbestrahlung eines Ziels 2 beim Durchlaufen einer turbulenten Atmosphäre gemäß einer Ausführungsform der Erfindung. Ein entsprechendes Verfahren M ist als Ablaufdiagramm in Fig. 2 zu sehen. Hierbei folgt die in Fig. 1 gezeigte Variante einem generischen Grundaufbau des Systems 10, der sowohl zur Messung, als auch zur Korrektur von turbulenzbedingten Wellenfrontfehlern geeignet ist.

Das System 10 umfasst grundlegend eine Lasereinrichtung 1, welche zur Erzeugung eines (gepulsten) Messlaserstrahls 4 ausgebildet ist. Ferner umfasst das System 10 in dieser Ausbildung eine Wirklasereinrichtung 17 zur Erzeugung eines Wirklaserstrahls 3. Das System 10 ist somit als Laserwaffe ausgebildet.

Der Messlaserstrahl 4 tritt in eine erste Korrektureinrichtung 7 ein und wird sodann von einer optischen Einrichtung 6 auf das Ziel 2 gelenkt. Die optische Einrichtung 6 kann hierbei unter anderem einen ersten Strahlteiler 9, einen Umlenkspiegel 13 (Tip-Tilt-Einheit) zum Bewegen des Messlaserstrahl 4 über eine Zieloberfläche des Ziels 2, einen zweiten Strahlteiler 19 (z.B. ein dicroitischer Spiegel oder dergleichen) zum Einkoppeln des Wirklaserstrahls 3 sowie ein Teleskop 11 umfassen, durch welche der Messlaserstrahl 7 auf das Ziel 2 fokussiert wird. Der Messlaserstrahl 4 wird von dem Ziel 2 zurückreflektiert und tritt erneut in die optische Einrichtung 6 ein, welche diesen reflektierten Laserstrahl 5 empfängt, über den Strahlteiler ablenkt und in einer Sensorebene einer Sensoreinrichtung 8 kollimiert.

Die Sensoreinrichtung 8 ist als Hartmann-Shack-Sensor zum wiederholten Messen eines ortsabhängigen Gradientenfeldes einer Wellenfront des kollimierten reflektierten Laserstrahls 5 in der Sensorebene in einer Anzahl von N Einzelmessungen ausgebildet. Anders formuliert wird somit die differentielle Wellenfront des zurückreflektierten Strahls 5 in der Sensorebene gemessen. Hierbei wird der Messlaserstrahl 4 nach jeder Einzelmessung derart angepasst, dass die Einzelmessungen statistisch unabhängig voneinander sind. Zu diesem Zweck wird der Messlaserstrahl 4 mit dem Umlenkspiegel 13 auf dem Ziel 2 innerhalb des isoplanatischen Winkels verschoben (d.h. der Umlenkspiegel 13 nimmt für jede Einzelmessung eine geringfügig andere Stellung ein). Neben dem Gradientenfeld kann optional zusätzlich auch die ortsabhängige Intensität bestimmt werden, um die Genauigkeit der Turbulenzbestimmung zu verbessern.

Die gemessenen Signale, insbesondere das aktuelle gemessene Gradientenfeld, werden an eine Berechnungseinrichtung 11 weitergeleitet (z.B. ein Computersystem), welche dazu ausgebildet ist, das gemessene ortsabhängige Gradientenfeld über die Anzahl von Einzelmessungen zu mitteln (ggf. ergänzt durch eine entsprechende Mittelung der gemessenen Intensitäten) und darauf aufbauend eine Turbulenzstörung des Messlaserstrahls 4 abzuschätzen. Dafür wird aus den Teilmessungen der differentiellen Wellenfront, d.h. der Einzelmessungen des Gradientenfeldes, eine gemittelte differentielle Wellenfront bestimmt, aus welcher dann mit bekannten Verfahren der Literatur eine zugehörige gemessene Wellenfront rekonstruiert wird. Diese rekonstruierte (turbulenz-gestörte) Wellenfront wird als Messwert für die Turbulenz an die Korrektureinrichtung 7 zur Turbulenzkompensation weitergeleitet.

Die Berechnungseinrichtung 11 wird hierzu von einer Steuereinrichtung 15 des Systems 10 gesteuert, welche unter anderem auch den Messablauf des Systems 10 steuern kann, d.h. entsprechend dem beschriebenen Algorithmus die Lasereinrichtung 1, ggf. die erste Korrektureinrichtung 7, die Sensoreinrichtung 8 sowie die optische Einrichtung 6, insb. den Umlenkspiegel 13.

Die optionale erste Korrektureinrichtung 7 kann dabei dazu ausgebildet sein, zur Turbulenzkompensation eine Anpassung der Laserbestrahlung des Ziels 2 durch den Messlaserstrahl 4 in Abhängigkeit von der abgeschätzten Turbulenzstörung durchzuführen (bspw. durch Phasenpassung und ggf. einer Amplitudenanpassung). Dies kann zur Verbesserung der Messung der Turbulenzstörung führen.

Eine zweite Korrektureinrichtung 16 kann dabei dazu ausgebildet sein, zur Turbulenzkompensation eine Anpassung der Laserbestrahlung des Ziels 2 durch den Wirklaserstrahl 3 in Abhängigkeit von der abgeschätzten Turbulenzstörung durchzuführen (bspw. durch Phasenpassung und ggf. einer Amplitudenanpassung). Dies kann beispielsweise eingesetzt werden, um den Wirklaserstrahl 3 der Laserwaffe in Abhängigkeit von der abgeschätzten Turbulenzstörung anzupassen, um die Bestrahlungsqualität des Ziels 2 und damit Wirkleistung der Laserwaffe zu verbessern. Ebenso kann der Einfluss von Turbulenzen auf einen Messlaserstrahl minimiert werden.

Der derart korrigierte Wirklaserstrahl 18 kann über den zweiten Strahlteiler 19 in den Strahlengang der optischen Einrichtung 6 eingekoppelt und durch das Teleskop 14 auf das Ziel 2 fokussiert werden.

Die Lasereinrichtung 1 wird dabei gepulst betrieben, sodass die Sensoreinrichtung 8 durch ein geeignetes Gating angesteuert werden kann, um Rückstreuungen im optischen Aufbau zu unterdrücken, die andernfalls aufgrund der Identität von Sende- und Empfangskanal in den Empfangskanal zurückgekoppelt werden könnten und das Empfangssignal stören könnten. Das Gating kann dabei ebenfalls dazu genutzt werden, um möglicherweise auftretendes Prozessleuchten zu unterdrücken, welches durch die Bestrahlung des Ziels 2 mit dem Wirklaserstrahl 3 entsteht.

Das mit Bezug auf Fig. 2 schematisch gezeigte Verfahren M umfasst entsprechend unter M1 Fokussieren des Messlaserstrahls 4 auf das Ziel 2 mit der optischen Einrichtung 6. Das Verfahren M umfasst unter M2 ferner Kollimieren des von dem Ziel 2 aufgrund der Bestrahlung mit dem Messlaserstrahl 4 zurückreflektierten und mit der optischen Einrichtung 6 empfangenen reflektierten Laserstrahls 5 in der Sensorebene der Sensoreinrichtung 8. Das Verfahren M umfasst unter M3 ferner wiederholtes Messen des ortsabhängigen Gradientenfeldes einer Wellenfront des kollimierten reflektierten Laserstrahls 5 in der Sensorebene in einer Anzahl von statistisch unabhängigen Einzelmessungen. Das Verfahren M umfasst unter M4 ferner Mitteln des gemessenen Gradientenfeldes über die Anzahl von Einzelmessungen zur Abschätzung der Turbulenzstörung des Messlaserstrahls 4, wobei aus dem gemittelten Gradientenfeld eine zugehörige turbulenz-gestörte Wellenfront mittels digitaler Signalverarbeitung rekonstruiert wird. Abschließend kann das Verfahren M unter M5 Anpassen der Laserbestrahlung des Ziels 2 in Abhängigkeit von der abgeschätzten Turbulenzstörung umfassen, um den Einfluss von Turbulenzen zu kompensieren.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet.

Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Lasereinrichtung
- 2: Ziel
- 3: Wirklaserstrahl
- 4: Messlaserstrahl
- 5: kollimierter reflektierter Laserstrahl
- 6: optische Einrichtung
- 7: Korrektureinrichtung Messlaser
- 8: Sensoreinrichtung
- 9: erster Strahlteiler
- 10: System
- 11: Berechnungseinrichtung
- 12: turbulente Atmosphäre
- 13: Umlenkspiegel
- 14: Teleskop
- 15: Steuereinrichtung
- 16: Korrektureinrichtung Wirklaser
- 17: Wirklasereinrichtung
- 18: korrigierter Wirklaserstrahl
- 19: zweiter Strahlteiler
- M: Verfahren
- M1-M5: Verfahrensschritte

## Patentansprüche

1. Verfahren (M) zur Messung des Einflusses turbulenter Störungen auf eine Laserbestrahlung eines Ziels (2) beim Durchlaufen einer turbulenten Atmosphäre, mit:
Fokussieren (M1) eines Messlaserstrahls (4) auf das Ziel (2) mit einer optischen Einrichtung (6);
Kollimieren (M2) eines von dem Ziel (2) aufgrund der Bestrahlung mit dem Messlaserstrahl (4) zurückreflektierten und mit der optischen Einrichtung (6) empfangenen reflektierten Laserstrahls (5) in einer Sensorebene einer Sensoreinrichtung (8);
wiederholtes Messen (M3) eines ortsabhängigen Gradientenfeldes einer Wellenfront des kollimierten reflektierten Laserstrahls(5) in der Sensorebene in einer Anzahl von Einzelmessungen, wobei der Messlaserstrahl (4) nach jeder Einzelmessung derart angepasst wird, dass die Einzelmessungen statistisch unabhängig voneinander sind; und
Mitteln (M4) des gemessenen Gradientenfeldes über die Anzahl von Einzelmessungen zur Abschätzung einer Turbulenzstörung des Messlaserstrahls (4), wobei aus dem Gradientenfeld eine zugehörige turbulenz-gestörte Wellenfront mittels digitaler Signalverarbeitung rekonstruiert wird.

2. Verfahren (M) nach Anspruch 1, wobei der Messlaserstrahl (4) nach jeder Einzelmessung auf dem Ziel (2) verschoben und/oder verzerrt wird, um die Einzelmessungen statistisch unabhängig voneinander zumachen.

3. Verfahren (M) nach Anspruch 1 oder 2, wobei als Sensoreinrichtung (8) ein Hartmann-Shack-Sensor verwendet wird.

4. Verfahren (M) nach einem der Ansprüche 1 bis 3, wobei der Messlaserstrahl (4) gepulst betrieben wird.

5. Verfahren (M) nach einem der Ansprüche 1 bis 4, wobei zusammen mit dem Gradientenfeld der Wellenfront eine ortsabhängige Intensität des kollimierten reflektierten Laserstrahls (5) wiederholt gemessen und anschließend ebenfalls über die Anzahl von Einzelmessungen zur Abschätzung einer Turbulenzstörung des Messlaserstrahls (4) gemittelt wird.

6. Verfahren (M) nach einem der Ansprüche 1 bis 5, wobei das Ziel (2) mit einem Wirklaserstrahl (3, 18) einer Laserwaffe bestrahlt wird, wobei das Verfahren ferner umfasst:
Anpassen (M5) der Bestrahlung des Ziels (2) mit dem Wirklaserstrahl (3, 18) in Abhängigkeit von der abgeschätzten Turbulenzstörung, um den Einfluss von Turbulenzen zu kompensieren.

7. System (10) zur Messung des Einflusses turbulenter Störungen beim Durchlaufen einer turbulenten Atmosphäre mit einem Verfahren (M) nach einem der Ansprüche 1 bis 6, mit:
einer Lasereinrichtung (1), welche zur Erzeugung eines Messlaserstrahls (4) ausgebildet ist;
einer optischen Einrichtung (6), welche zur Fokussierung des Messlaserstrahls (4) auf das Ziel (2), zum Empfang eines von dem Ziel (2) aufgrund der Bestrahlung mit dem Messlaserstrahl (4) zurückreflektierten Laserstrahls (5) und zur Kollimierung des zurückreflektierten Laserstrahls (5) in einer Sensorebene ausgebildet ist;
einer Sensoreinrichtung (8), welche zum wiederholten Messen eines ortsabhängigen Gradientenfeldes einer Wellenfront des kollimierten reflektierten Laserstrahls (5) in der Sensorebene in einer Anzahl von Einzelmessungen ausgebildet ist, wobei der Messlaserstrahl (4) nach jeder Einzelmessung derart angepasst wird, dass die Einzelmessungen statistisch unabhängig voneinander sind; und
einer Berechnungseinrichtung (11), welche dazu ausgebildet ist, das gemessene Gradientenfeld über die Anzahl von Einzelmessungen zu mitteln und
darauf aufbauend eine Turbulenzstörung des Messlaserstrahls (4) abzuschätzen, wobei aus dem gemittelten Gradientenfeld eine zugehörige turbulenz-gestörte Wellenfront mittels digitaler Signalverarbeitung rekonstruiert wird.

8. System (10) nach Anspruch 7, wobei die optische Einrichtung (6) dazu ausgebildet ist, den Messlaserstrahl (4) nach jeder Einzelmessung auf dem Ziel (12) zu verschieben und/oder zu verzerren, um die Einzelmessungen statistisch unabhängig voneinander zumachen.

9. System (10) nach Anspruch 7 oder 8, wobei die Sensoreinrichtung (8) als Hartmann-Shack-Sensor ausgebildet ist.

10. System (10) nach einem der Ansprüche 7 bis 9, wobei die Lasereinrichtung (1) dazu ausgebildet ist, den Messlaserstrahl (4) gepulst zu betreiben.

11. System (10) nach einem der Ansprüche 7 bis 10, wobei die Sensoreinrichtung (8) dazu ausgebildet ist, zusammen mit dem Gradientenfeld eine ortsabhängige Intensität des kollimierten reflektierten Laserstrahls (5) wiederholt zu messen, wobei die Berechnungseinrichtung (11) dazu ausgebildet ist, anschließend ebenfalls die gemessenen Intensitäten über die Anzahl von Einzelmessungen zur Abschätzung der Turbulenzstörung des Messlaserstrahls (4) zu mitteln.

12. System (10) nach einem der Ansprüche 7 bis 11, wobei das System (10) als Laserwaffe zur Erzeugung eines Wirklaserstrahls (3, 18) für die Bestrahlung des Ziels (2) ausgebildet ist, wobei das System ferner umfasst:
einer Korrektureinrichtung (16), welche dazu ausgebildet ist, die Bestrahlung des Ziels (2) mit dem Wirklaserstrahl (3, 18) in Abhängigkeit von der abgeschätzten Turbulenzstörung anzupassen, um den Einfluss von Turbulenzen zu kompensieren.
